(19) Europäisches Patentamt
European Patent Office
Office européen des brevets

(11) EP 3 910 370 A1

(12) DEMANDE DE BREVET EUROPEEN

(43) Date de publication:
17.11.2021 Bulletin 2021/46

(51) Int Cl.:
G01S 7/35 (2006.01)
G01S 13/34 (2006.01)
G01S 13/935 (2020.01)
G01S 13/58 (2006.01)

(21) Numéro de dépôt: 21171814.3

(22) Date de dépôt: 03.05.2021

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME
Etats de validation désignés:
KH MA MD TN

(30) Priorité: 14.05.2020 FR 2004760

(71) Demandeur: THALES
92400 Courbevoie (FR)

(72) Inventeurs:
• MAZEAU, Thierry
33700 MERIGNAC (FR)
• LELONG, Bruno
78851 ELANCOURT (FR)
• HODE, Jean-Michel
33700 MERIGNAC (FR)
• GARREC, Patrick
33700 MERIGNAC (FR)

(74) Mandataire: Marks & Clerk France
Immeuble "Visium"
22, avenue Aristide Briand
94117 Arcueil Cedex (FR)

(54) **PROCEDE DE DETECTION RADAR DE LA DISTANCE ET DE LA VITESSE RELATIVE D'UN ECHO PAR RAPPORT AU PORTEUR DU RADAR, ET RADAR METTANT EN OEUVRE UN TEL PROCEDE**

(57) L'invention concerne un procédé de détection radar de la distance et de la vitesse relative d'un écho par rapport au porteur du radar, comportant une étape d'émission, une étape de réception et une étape de traitement.
- Dans ladite étape d'émission, on génère (1) au moins une onde locale d'émission $OL_E$ selon une rampe de fréquence périodique destinée à être émise ;
- Dans ladite étape de réception, on génère (4) une onde locale de réception $OL_R$, ladite onde $OL_R$ étant une réplique de ladite onde locale d'émission $OL_E$ transposée d'une fréquence intermédiaire FI, ladite onde locale de réception $OL_R$ étant mélangée (5) à chaque signal reçu $S_R$, le signal mélangé étant filtré (6) pour donner un signal dont la composante fréquentielle $\Delta F$ est la différence fréquentielle entre l'onde $OL_R$ et le signal reçu $S_R$ ;
ladite différence fréquentielle $\Delta F$ étant numérisée, l'étape de traitement mesurant ladite distance et ladite vitesse à partir des informations contenues dans ladite différence fréquentielle.

FIG.1

**Description**

L'invention se situe dans le domaine des radars aéroportés et notamment des radars héliportés, par exemple pour l'aide à l'atterrissage. Dans ce domaine technique, l'invention concerne plus particulièrement les radars à onde continue et modulation linéaire de fréquence (LFM/CW) permettant de mesurer les vitesses du porteur dans les trois axes, ainsi que les distances dans les faisceaux radar.

Un radar LFM/CW doit nécessairement travailler en large bande de fréquences pour obtenir la meilleures résolution en distance possible, cette résolution $r$ étant donnée par la relation $r = c / 2.B$ où $c$ et $B$ représentent respectivement la célérité de l'onde émise et B la bande passante.

Une transposition entre l'onde émise et l'onde reçue est nécessaire pour transformer le retard entre l'onde émise et l'onde reçue en un signal dont la fréquence est proportionnelle à ce retard, donc à la distance. Cette technique de transposition est connue sous l'expression « deramping ». Cette expression sera utilisée par la suite.

En plus de la distance, il est nécessaire de mesurer la vitesse. Pour mesurer la vitesse par effet Doppler, le radar doit être équipé d'une fonction de détection d'amplitude et de phase pour réaliser deux voies I et Q permettant de conserver le signe du Doppler lorsque le signal est transposé en bande de base. La conservation de ce signe est d'autant plus importante que les applications en jeu (aide à l'atterrissage d'aéronefs notamment) peuvent concerner des distances faibles et des faibles vitesses, autour de zéro pouvant alterner positivement ou négativement de manière aléatoire. Cette fonction de détection sera appelée par la suite DAP (Détecteur Amplitude / Phase).

Un problème inhérent à ce type de solution est qu'il est très difficile de conserver une quadrature et un équilibre des gains entre les deux voies d'un DAP large bande en hyperfréquence. Il faut donc effectuer un codage sur porteuse pour réaliser un DAP en numérique.

Cependant, un codage sur porteuse nécessite de coder la bande émise et donc de traiter un nombre important d'échantillons. Un problème plus général est donc de concilier ces capacités de mesures de distances et vitesses, tout en conservant une bonne sélectivité (qui ne peut être celle de la bande émise), en réalisant un DAP numérique sur un nombre restreint d'échantillons.

Les solutions de l'art antérieur ne permettent pas d'atteindre cet objectif. Classiquement un deramping est réalisé dès la première transposition, mais cela ne permet pas de conserver le signe du Doppler, ce qui peut être utile pour des applications air/sol qui ne traitent que les approches d'aéronefs.

Les radars de navigation par exemple ne traitent que les Doppler et ne font pas de deramping, n'ayant pas besoin de mesures de distances. Un DAP est réalisé dans ce cas directement en hyperfréquence. Une solution pour traiter les deux types de mesures (distance et vitesse) serait de coder toute la bande reçue autour d'un signal en fréquence intermédiaire (FI) et de réaliser la fonction DAP et deramping en numérique. Cependant, cette solution demande un traitement numérique sur un nombre d'échantillons important (sur au moins deux fois la bande reçue) et de plus cette solution dégrade la sélectivité de la réception puisque le filtre FI doit passer au moins la bande reçue. La sélectivité du récepteur est en effet un critère de bon fonctionnement important car elle permet à celui-ci de se protéger de l'environnement électromagnétique hors bande.

A titre d'exemple, pour obtenir une résolution d'un mètre, il est nécessaire d'émettre dans une bande de 150 MHz, ce qui implique de traiter le signal sur au moins 300 Méga échantillons par seconde, alors que si le deramping est réalisé dès le premier mélange, la bande utile à traiter est réduite à quelques dizaines de kHz selon la distance et la rampe de modulation en fréquence émise $K = B/T_E$, B étant la bande émise ou reçue et $T_E$ étant le temps d'émission de la rampe de fréquences

Les autres solutions concernent les traitements par FFT qui permettent d'avoir les informations de distance et de vitesse en réception homodyne (sans fréquence intermédiaire), mais les traitements sont plus couteux en calculs.

Un but de l'invention est notamment de répondre au problème général précité, à savoir concilier ces capacités de mesures de distances et vitesses, tout en conservant une bonne sélectivité, en réalisant un DAP numérique sur un nombre restreint d'échantillons. A cet effet, l'invention a pour objet un procédé de détection radar de la distance et de la vitesse relative d'un écho par rapport au porteur du radar, comportant une étape d'émission, une étape de réception et une étape de traitement, telles que :

- dans ladite étape d'émission, on génère au moins une onde locale d'émission OLE selon une rampe de fréquence périodique destinée à être émise ;
- dans ladite étape de réception, on génère une onde locale de réception OLR, ladite onde OLR étant une réplique de ladite onde locale d'émission OLE transposée d'une fréquence intermédiaire FI, ladite onde locale de réception OLR étant mélangée à chaque signal reçu SR, le signal mélangé étant filtré pour donner un signal dont la composante fréquentielle ΔF est la différence fréquentielle entre l'onde OLR et le signal reçu SR ;

ladite différence fréquentielle ΔF étant numérisée, l'étape de traitement mesurant ladite vitesse à partir des informations contenues dans ladite différence fréquentielle.

Dans un mode de mise en œuvre particulier, dans ladite étape d'émission, une deuxième onde locale d'émission OLE1 est générée et émise selon un rampe de fréquence périodique de pente différente de la pente de l'onde OLE, une deuxième onde locale de réception OLR1 étant générée par réplication de ladite onde OLE1 et transposition de ladite fréquence intermédiaire FI, ladite deuxième onde OLR1 étant mélangée audit signal reçu SR, le signal mélangé étant filtré pour donner un signal dont la composante fréquentielle ΔF1 est la différence fréquentielle entre l'onde OLR1 et le signal reçu SR, ladite différence fréquentielle ΔF1 étant numérisée, l'étape de traitement mesurant ladite distance et ladite vitesse à partir des informations contenues dans la différence fréquentielle ΔF1 et de la différence fréquentielle ΔF.

Ledit procédé est par exemple appliqué pour l'aide à l'atterrissage dudit porteur, ledit porteur étant par exemple un aéronef ayant la capacité de faire du vol stationnaire, par exemple un hélicoptère.

L'invention a également pour objet un radar mettant en œuvre un tel procédé. Ledit radar comportant par exemple :

- Un premier générateur de forme d'onde générant ladite onde locale d'émission ;

- Une antenne destinée à émettre ladite onde locale d'émission ;

- Un mélangeur hyperfréquence ;

- Un circulateur guidant ladite onde locale d'émission depuis ledit premier générateur de forme d'onde vers ladite antenne, et guidant un signal reçu depuis ladite antenne vers ledit mélangeur ;

- Un deuxième générateur de forme d'onde générant ladite onde locale de réception à destination dudit mélangeur afin de mélanger ladite onde locale de réception avec ledit signal reçu ;

- Un filtre filtrant ladite fréquence intermédiaire FI dans le signal mélangé en sortie dudit mélangeur ;

- Un récepteur recevant le signal en sortie dudit filtre ;

- Un convertisseur analogique-numérique convertissant ledit signal issu dudit récepteur ;

- Des moyens de traitement ;

- Un système de synchronisation synchronisant lesdits générateurs de forme d'onde.

D'autres caractéristiques et avantages de l'invention apparaîtront à l'aide de la description qui suit, faite en regard de dessins annexés qui représentent :

La figure 1, par un synoptique une illustration du principe d'émission et de réception selon l'invention ;

La figure 2, une illustration de l'allure d'une onde locale d'émission utilisée par l'invention ;

La figure 3, une illustration de l'allure d'une onde reçue correspondante ;

La figure 4, une illustration d'une bande de fréquences occupées par des échos fixes et la bande de fréquence repliée correspondante.

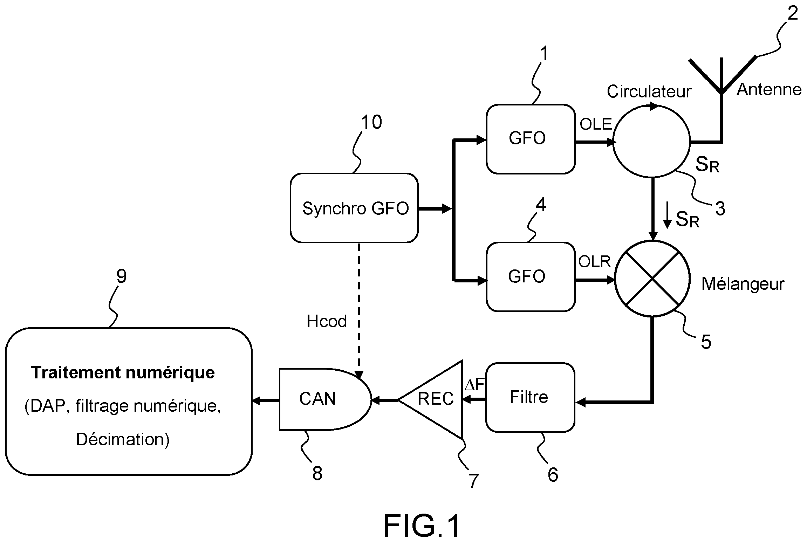

La figure 1 illustre le principe d'émission et de réception selon l'invention. Le synoptique représente un exemple de système mettant en œuvre l'étape d'émission, l'étape de réception et l'étape de traitement.

Pour concilier :

- La conservation du signe du Doppler ;

- L'optimisation de la sélectivité;

- La limitation du nombre d'échantillons à traiter.

l'invention effectue un deramping sur porteuse en fréquence intermédiaire FI et réalise un DAP numérique, en utilisant dans l'étape d'émission une onde locale d'émission (OL$_E$). Cette onde locale d'émission est réalisée par un premier générateur de forme d'onde 1 (GFO). Elle est transmise vers l'antenne d'émission et de réception 2 via un circulateur 3. L'onde OL$_E$ est alors rayonnée par l'antenne 2 avec les caractéristiques suivantes :

$$OL_E = e^{iKt^2} \, pour \, t \, \epsilon \, [0, T_E] \quad (1)$$

Dans cette relation, K représente la pente $B/T_E$ et t le temps.

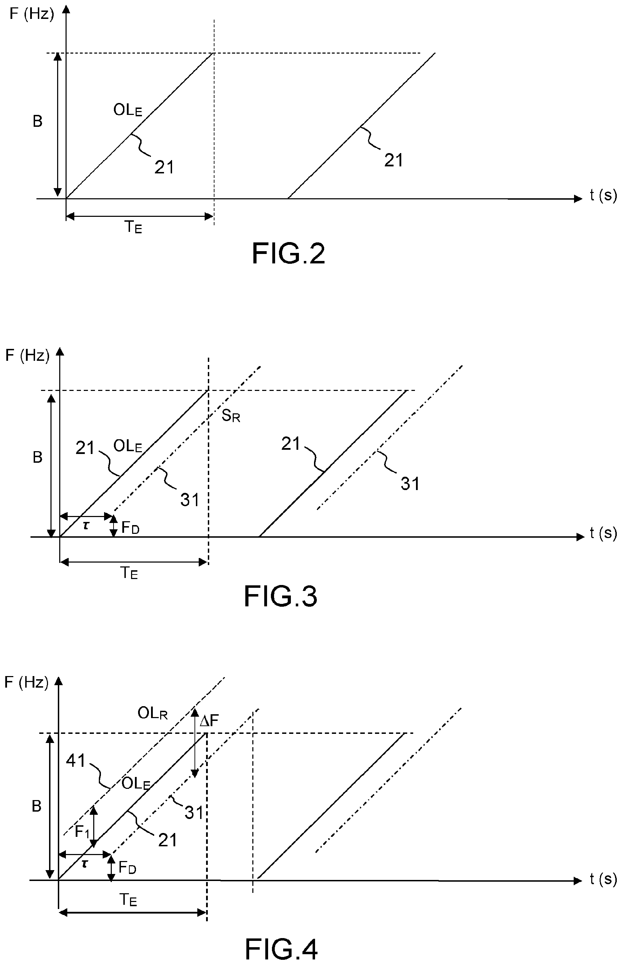

La figure 2 illustre l'allure de l'onde locale d'émission OL$_E$, évoluant selon la rampe de fréquence périodique 21 (de valeur K) en fonction du temps t, répétée périodiquement selon T$_E$. Dans cette représentation, la fréquence OL$_E$ évolue entre 0 et B (largeur de bande) selon la rampe 21, la fréquence porteuse ayant été soustraite pour des facilités de représentation. La valeur de T$_E$ peut être de l'ordre de 150 ms par exemple.

On revient à la figure 1. Un signal S$_R$ est reçu en retour avec un retard τ proportionnel à la distance d de l'écho :

$$\tau = 2.d \, / \, c$$

Le signal reçu subit aussi un décalage en fréquence F$_D$ lié à l'effet Doppler :

$$F_D = 2V \, / \, \lambda$$

V étant la vitesse radiale relative entre le faisceau et la cible qui est au sol dans l'application d'une aide à l'atterrissage par exemple.

La relation entre cette vitesse radiale et la vitesse du porteur est la suivante :

Vp = αV où α est un coefficient trigonométrique lié à la projection du vecteur vitesse Vp du porteur sur l'axe d'éclairement de l'antenne 2.

La figure 3 illustre l'allure du signal reçu S$_R$ selon le même principe de représentation que celui de la figure 2. La modulation de l'onde reçue SR suit une rampe de fréquences périodique 31 décalée en temps de τ et décalée en fréquence de F$_D$ par rapport à la rampe d'émission 21 de l'onde OL$_E$.

Le signal reçu S$_R$ vérifie la relation suivante :

$$S_R = OLE(t - \tau) \pm F_D = K(t - \tau) \pm F_D \, pour \, t \, \epsilon \, [\tau; T_E + \tau] \quad (2)$$

Il est à noter que la fréquence minimum mesurable est égale à 1/T$_E$.

Dans la relation (2), comme dans les autres relations, le signal est exprimé en fréquence, indépendamment de l'amplitude.

On revient de nouveau à la figure 1 pour décrire plus précisément l'étape de réception. Une deuxième onde locale de réception est générée par un second générateur de forme d'onde 4. Cette onde locale en réception (OL$_R$) est utilisée comme fréquence intermédiaire pour transposer le signal reçu. A cet effet, elle est combinée classiquement avec le signal S$_R$, issu du circulateur 3, par un mélangeur hyperfréquence 5.

La figure 4 illustre l'allure de l'onde locale de réception OL$_R$ représentée par une rampe de fréquence périodique 41 fonction du temps. Cette OL$_R$ est une réplique du signal émis OL$_E$, représenté par la première rampe 21, transposée d'une fréquence FI en vue de réaliser le deramping sur onde porteuse sur cette fréquence FI. Comme illustré par la figure 1, ce signal OL$_R$ est mélangé avec le signal SR. Il est ensuite filtré par un filtre 6 pour ne conserver que la composante fréquentielle ΔF correspondant à la différence fréquentielle entre l'onde locale de réception OL$_R$ et le signal reçu S$_R$, soit en regard de la figure 4 :

$$\Delta F = OL_R - S_R$$

la différence fréquentielle exprimant le fait qu'à chaque instant, la fréquence ΔF est la différence entre la fréquence du signal local de réception OL$_R$ et la fréquence du signal reçu S$_R$.

Ecrit autrement :

$$\Delta\mathrm{F} = K.\tau \; \pm F_D + FI \; \; pour \; t \; \epsilon \; [0, T_E + \tau_{max}] \; (3)$$

$\tau_{max}$ étant le retard maximum issu de la mesure de la distance maximum.

La bande de fréquences en FI (fréquence intermédiaire) dépend de la vitesse maximum et de la distance maximum à mesurer, ainsi que de la pente K de la rampe de modulation du signal émis. Elle est donc choisie en conséquence.

La relation (3) montre que $\Delta F$ contient l'information de Doppler $F_D$, donc de vitesse, la distance étant obtenue par le retard $\tau$ mesuré par ailleurs.

A titre d'exemple, on peut prendre le cas d'un hélicoptère ayant une altitude maximum de vol de 4500 mètres et une vitesse maximum de 125 m/s, correspondant à une fréquence Doppler $F_D$ égale à 10 kHz. Avec une spécification nécessitant une mesure de fréquence minimum de 10 Hz et une résolution distance de 1 mètre, la bande B d'évolution de la rampe de l'onde $OL_E$ est B = 150 MHz. Il s'ensuit alors :

- pour la durée de rampe, TE = 0,1 seconde ;

- soit une rampe K = 1,5 GHz/s.

Le retard maximum correspondant à la distance maximum de 4500 mètres est $\tau_{max}$ = 30 $\mu$s, correspondant à un signal reçu $S_R$ tel que :

$$S_{R\,max} = \; 1.5 \, e^9 * 30 \, e^{-6} + 10 \, e^3 = 55 \, kHz \; \; (4)$$

On revient à la figure 1. Le filtre 6 est suivi d'un récepteur 7 (amplificateur en réception), recevant en entrée le signal $\Delta F$. Ce dernier a donc, dans le présent exemple, une bande de 55 kHz centrée sur la fréquence FI. Selon les techniques connues, le filtre 6 en sortie du mélangeur 5 tient compte de ces caractéristiques. Le récepteur 7 est un récepteur classique ayant notamment pour fonction de mettre le signal $\Delta F$ à l'échelle du convertisseur analogique-numérique 8, apte à être converti par celui-ci.

Le filtre 7 est en effet suivi du convertisseur 8 qui convertit $\Delta F$ en signal numérique. Le signal $\Delta F$ est codé à la cadence d'une horloge $H_{cod}$ dont la fréquence est très supérieure aux fréquences FI et $\Delta F_{max}$ (valeur maximum de la fréquence $\Delta F$), plus particulièrement $H_{cod} \gg 2.(FI + \Delta F_{max})$.

Le signal à composante fréquentielle $\Delta F$ converti numériquement est transmis à des moyens de traitement numérique 9. Ces derniers effectuent alors un traitement numérique temporel classique permettant d'obtenir deux voies de données numériques sur les composantes I et Q en bande de base à partir du signal $\Delta F$ numérisé, après détection d'amplitude et de phase, filtrage numérique et décimation, les moyens de traitement 9 réalisant de façon classique la fonction DAP.

Il est à noter que le signal à la fréquence $\Delta F$ porte une composante vitesse et distance (voir la relation (3)). Il peut donc être nécessaire de discriminer ces deux éléments si le retard $\tau$ donnant la distance n'a pas été exploité. Cette discrimination est par exemple effectuée en émettant un autre signal avec une deuxième pente pour obtenir un système à deux équations à deux inconnues avec $\Delta F$ et $\Delta F_1$. On peut à cet effet prendre une première pente $OL_E$ = Kt, pour la première onde local d'émission, puis une deuxième pente $OL_{E1}$ = -Kt + B, pour la deuxième pente locale d'émission. On peut alors extraire la vitesse et la distance du système d'équations à partir de la résolution de $\Delta F$ et $\Delta F_1$. Le principe de la discrimination entre la distance et la vitesse est notamment décrit dans la demande de brevet FR 1800838.

La différence fréquentielle $\Delta F_1$ est obtenue de la même façon que la différence fréquentielle $\Delta F$, à partir de onde locale d'émission $OL_{E1}$, puis de l'onde locale de réception $OL_{R1}$ obtenue par transposition selon la fréquence FI comme illustré par la figure 4, et par mélange 5 et filtrage 6 comme pour $\Delta F$.

Un système de synchronisation 10 génère un signal de synchronisation à destination des deux générateurs de forme d'onde 1, 4 et au convertisseur analogique-numérique 8 (l'horloge $H_{cod}$ étant alors synchrone du signal de synchronisation). Tous les signaux générés par les GFO 1, 4 sont alors cohérents en phase.

Le synoptique de la figure 1 est donné à titre d'exemple, d'autres schémas sont possible pourvu qu'ils permettent de mettre le procédé selon l'invention. En particulier, plusieurs modes de génération d'onde sont possibles.

Le procédé optimise avantageusement l'architecture du radar en permettant de mesurer une composante fréquentielle liée aux distances et une autre liée aux vitesses, en garantissant une très bonne sélectivité et la conservation du signe Doppler avec un très haut niveau de rejection des fréquences images, tout en limitant le flux de données à traiter.

L'invention s'applique notamment pour des porteurs tels que des hélicoptères, mais elle s'applique avantageusement pour tous aéronefs aptes faire du vol stationnaire (« hovering »).

**Revendications**

1. Procédé de détection radar de la distance et de la vitesse relative d'un écho par rapport au porteur du radar, comportant une étape d'émission, une étape de réception et une étape de traitement, **caractérisé en ce que** :

   - dans ladite étape d'émission, on génère (1) au moins une onde locale d'émission $OL_E$ selon une rampe de fréquence périodique (21) destinée à être émise ;
   - dans ladite étape de réception, on génère (4) une onde locale de réception $OL_R$ (41), ladite onde $OL_R$ étant une réplique de ladite onde locale d'émission $OL_E$ transposée d'une fréquence intermédiaire FI, ladite onde locale de réception $OL_R$ étant mélangée (5) à chaque signal reçu $S_R$, le signal mélangé étant filtré (6) pour donner un signal dont la composante fréquentielle $\Delta F$ est la différence fréquentielle entre l'onde $OL_R$ et le signal reçu $S_R$ ;
   - ladite différence fréquentielle $\Delta F$ étant numérisée, l'étape de traitement mesurant ladite vitesse à partir des informations contenues dans ladite différence fréquentielle.

2. Procédé de détection selon la revendication 1, **caractérisé en ce que** dans ladite étape d'émission, une deuxième onde locale d'émission $OL_{E1}$ est générée et émise selon un rampe de fréquence périodique de pente différente de la pente de l'onde $OL_E$, une deuxième onde locale de réception $OL_{R1}$ étant générée par réplication de ladite onde $OL_{E1}$ et transposition de ladite fréquence intermédiaire FI, ladite deuxième onde $OL_{R1}$ étant mélangée (5) audit signal reçu $S_R$, le signal mélangé étant filtré (6) pour donner un signal dont la composante fréquentielle $\Delta F_1$ est la différence fréquentielle entre l'onde $OL_{R1}$ et le signal reçu $S_R$ ;
   ladite différence fréquentielle $\Delta F_1$ étant numérisée, l'étape de traitement mesurant ladite distance et ladite vitesse à partir des informations contenues dans la différence fréquentielle $\Delta F_1$ et de la différence fréquentielle $\Delta F$.

3. Procédé selon l'une quelconque des revendications précédentes, **caractérisé en ce qu'**il est appliqué pour l'aide à l'atterrissage dudit porteur.

4. Procédé selon la revendication 3, **caractérisé en ce que** ledit porteur est un aéronef ayant la capacité de faire du vol stationnaire.

5. Procédé selon la revendication 4, **caractérisé en ce que** ledit aéronef est un hélicoptère.

6. Radar, **caractérisé en ce qu'**il est apte à mettre en œuvre le procédé selon l'une quelconque des revendications précédentes.

7. Radar selon la revendication 6, **caractérisé en ce qu'**il comporte :

   - Un premier générateur de forme d'onde (1) générant ladite onde locale d'émission ;
   - Une antenne (2) destinée à émettre ladite onde locale d'émission ;
   - Un mélangeur hyperfréquence (5) ;
   - Un circulateur (3) guidant ladite onde locale d'émission depuis ledit premier générateur de forme d'onde (1) vers ladite antenne, et guidant un signal reçu depuis ladite antenne vers ledit mélangeur ;
   - Un deuxième générateur de forme d'onde (4) générant ladite onde locale de réception à destination dudit mélangeur (5) afin de mélanger ladite onde locale de réception avec ledit signal reçu ;
   - Un filtre (6) filtrant ladite fréquence intermédiaire FI dans le signal mélangé en sortie dudit mélangeur ;
   - Un récepteur (7) recevant le signal en sortie dudit filtre ;
   - Un convertisseur analogique-numérique (8) convertissant ledit signal issu dudit récepteur ;
   - Des moyens de traitement (10) ;
   - Un système de synchronisation (10) synchronisant lesdits générateurs de forme d'onde (1, 4).

Antenne

Circulateur

$S_R$

$S_R$

Mélangeur

GFO

OLE

GFO

OLR

Filtre

$\Delta F$

REC

Synchro GFO

Hcod

CAN

**Traitement numérique**
(DAP, filtrage numérique, Décimation)

FIG.1

FIG.2

FIG.3

FIG.4

Europäisches Patentamt

European Patent Office

Office européen des brevets

## RAPPORT DE RECHERCHE EUROPEENNE

Numéro de la demande

EP 21 17 1814

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JUNHYEONG PARK ET AL: "Leakage Mitigation in Heterodyne FMCW Radar For Small Drone Detection with Stationary Point Concentration Technique", ARXIV.ORG, CORNELL UNIVERSITY LIBRARY, 201 OLIN LIBRARY CORNELL UNIVERSITY ITHACA, NY 14853, 15 septembre 2018 (2018-09-15), XP081143530, DOI: 10.1109/TMTT.2018.2889045 * sec II.A, V; figures 10,4 * | 1-7 | INV. G01S7/35 G01S13/935 G01S13/34 G01S13/58 |
| X | REINHARD FEGER ET AL: "A heterodyne 77-GHz FMCW radar with offset PLL frequency stabilization", WIRELESS SENSORS AND SENSOR NETWORKS (WISNET), 2011 IEEE TOPICAL CONFERENCE ON, IEEE, 16 janvier 2011 (2011-01-16), pages 9-12, XP031923190, DOI: 10.1109/WISNET.2011.5725023 ISBN: 978-1-4244-8414-0 * sec. I, II; figure 1 * | 1,2,5-7 | |
| A | EP 3 605 145 A1 (THALES SA [FR]) 5 février 2020 (2020-02-05) * figures 6a, 6b * | 2,7 | DOMAINES TECHNIQUES RECHERCHES (IPC) G01S |
| A | US 2009/002220 A1 (LOVBERG JOHN [US] ET AL) 1 janvier 2009 (2009-01-01) * abrégé; figure 1 * | 3-5 | |
| A | US 2019/064338 A1 (HOLT KEONE J [US] ET AL) 28 février 2019 (2019-02-28) * alinéas [0081], [0110] - alinéa [0119]; figures 11,12 * | 3-5 | |

-/--

Le présent rapport a été établi pour toutes les revendications

| Lieu de la recherche | Date d'achèvement de la recherche | Examinateur |
|---|---|---|
| Munich | 27 septembre 2021 | Rudolf, Hans |

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 21 17 1814

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2010/026564 A1 (KOLMHOFER ERICH [AT]) 4 février 2010 (2010-02-04) * abrégé; figures 2,7 * ----- | 1-7 | |
| A | US 2018/284254 A1 (VACANTI DAVID C [US] ET AL) 4 octobre 2018 (2018-10-04) * alinéa [0092] - alinéa [0104]; figure 10b * ----- | 1-7 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 27 septembre 2021 | Rudolf, Hans |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 21 17 1814

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-09-2021

| Document brevet cité au rapport de recherche | | Date de publication | Membre(s) de la famille de brevet(s) | | Date de publication |
|---|---|---|---|---|---|
| EP 3605145 | A1 | 05-02-2020 | AU | 2019208254 A1 | 20-02-2020 |
| | | | EP | 3605145 A1 | 05-02-2020 |
| | | | FR | 3084751 A1 | 07-02-2020 |
| | | | US | 2020041642 A1 | 06-02-2020 |
| US 2009002220 | A1 | 01-01-2009 | AUCUN | | |
| US 2019064338 | A1 | 28-02-2019 | EP | 3451016 A1 | 06-03-2019 |
| | | | US | 2019064338 A1 | 28-02-2019 |
| | | | US | 2020341132 A1 | 29-10-2020 |
| US 2010026564 | A1 | 04-02-2010 | DE | 102009027495 A1 | 11-02-2010 |
| | | | US | 2010026564 A1 | 04-02-2010 |
| US 2018284254 | A1 | 04-10-2018 | EP | 3382420 A1 | 03-10-2018 |
| | | | US | 2018284254 A1 | 04-10-2018 |

EPO FORM P0460

Pour tout renseignement concernant cette annexe : voir Journal Officiel de l'Office européen des brevets, No.12/82

**EP 3 910 370 A1**

**RÉFÉRENCES CITÉES DANS LA DESCRIPTION**

**Documents brevets cités dans la description**

- FR 1800838